**Europäisches Patentamt**

**European Patent Office**

**Office européen des brevets**

(19)

(11) **EP 1 426 658 A2**

(12) # EUROPEAN PATENT APPLICATION

(43) Date of publication:
**09.06.2004 Bulletin 2004/24**

(51) Int Cl.⁷: **F16H 13/10**

(21) Application number: **03027890.7**

(22) Date of filing: **04.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **04.12.2002 JP 2002382921**

(71) Applicants:
• **Okoshi, Hideo**
  **Fujisawa-shi, Kanagawa-ken (JP)**

• **Mikuni Makino Industrial Co.,Ltd.**
  **Ashigarakami-gun, Kanagawa (JP)**

(72) Inventor: **Okoshi, Hideo**
  **Fujisawa-shi Kanagawa-ken (JP)**

(74) Representative: **Viering, Jentschura & Partner**
  **Steinsdorfstrasse 6**
  **80538 München (DE)**

(54) **Rolling friction transmission apparatus of wedge roller type**

(57)     A rolling friction transmission apparatus of a wedge roller type is provided with: a rolling-surface-shaft (1); a ring (2); and three transmission rollers (4, 5, 6) in an unequally-spaced space generated between the rolling-surface-shaft and the ring. The two of the three transmission rollers (4, 5) are fixed, and the rest is used as a wedge roller (6) supported with its axis rotatable. The wedge roller is placed at a spatial position where the unequally-spaced space is wider than in the middle of the spatial position where the unequally-spaced space is at the widest and the spatial position where the unequally-spaced space is at the narrowest. Friction forces generated by torque on the contact surfaces among the rolling-surface-shaft, the ring, and the transmission rollers cause large normal forces on the contact surfaces.

FIG. 1

## Description

BACKGROUND OF THE INVENTION

1. Field of the Invention

The present invention relates to the structure of a rolling friction transmission apparatus of a wedge roller type (e.g., a rolling friction transmission gear of a wedge roller type) for transmitting torque without slipping between a shaft and a ring, out of rolling friction transmission apparatuses, each including a traction drive which uses the viscosity of a fluid oil film at the extreme-pressure generated between two rolling surfaces to thereby transmit power or rotation. The rolling friction transmission apparatus of a wedge roller type is provided with three transmission rollers in contact with the rolling surfaces of the shaft and the ring in an unequally spaced space generated unequally between the rolling surfaces of the shaft and the ring, which are mutually eccentric. One of these transmission rollers is used as a "wedge roller". Moreover, the tangential force, which is generated by the applied torque between (i) the transmission surface of the transmission roller and (ii) each of the rolling surfaces of the shaft and the ring, is magnified by the wedge effect of the wedge roller into large normal force.

2. Description of the Related Art

With respect to the rolling friction transmission apparatus of a wedge roller type, the application of U. S. Patent No. 3, 380, 312 was filed in the middle of 1960s. Since then, some applications about the surrounding mechanisms have been filed.

In the related arts, the tangent value of a wedge angle, which is 1/2 of an angle made by two tangential lines drawn at the contact points between (i) the transmission surface of the wedge roller and (ii) the rolling surfaces of the shaft and the ring, is made to be smaller than the friction coefficient at the contact points. This aims to transmit the torque to between the shaft and the ring without the gross slip. This is because if the gross slip occurs, the wedge roller slips too much at the contact points to transmit the torque. Moreover, the wedge angle at the contact points is treated to be always constant. Therefore, if a force generated by the torque acts to pull the wedge roller in the direction that the unequally-spaced space becomes narrower (i.e., smaller) and if the relationship between the wedge angle and the friction coefficient is satisfied, the wedge roller may be placed anywhere in the space.

In the related arts, there is a rolling friction transmission apparatus provided with: a roller with a large radius, which is not fixed, near the widest spatial position in the unequally spaced space generated unequally between the rolling surfaces of the shaft and the ring, which are mutually eccentric; and two rollers, which are fixed, placed at a narrower spatial position, where the unequally-spaced space is narrower than in the middle of (i) the widest spatial position where the unequally-spaced space is the widest (i.e., largest) and (ii) the narrowest spatial position where the unequally-spaced space is the narrowest (i.e., smallest). This aims to make the roller with a large radius act as a wedge roller with respect to the torque in both directions, by changing its position between the shaft and the ring in accordance with the direction of rotation.

However, most rolling friction transmission apparatuses except the above example are provided with: a roller with a large radius, which is fixed, near the widest spatial position; another roller which is fixed; and a wedge roller which can be moved, which are placed at the spatial positions where the unequally-spaced space is narrower than in the middle of the widest and narrowest spatial positions. The reason why each roller is placed as described above is not clearly disclosed.

When the torque is applied to this transmission apparatus, larger normal forces are generated at the contact points as the torque increases, and elastic deformation is generated near the surface of the contact points. In addition, the elastic deformation by the normal force of the ring to be triangle and the elastic deformation of the transmission roller to be oval act to expand the space. The wedge roller moves in the direction of the originally narrow space in the expanded space.

The movement of the wedge roller changes the contact positions on the rolling surfaces of the shaft and the ring with the transmission surface of the transmission roller, and this also changes the wedge angle.

In the related arts, some consideration is given not to inhibit the change of the spatial position of the wedge roller, such as making a space between a bearing for supporting the wedge roller and a shaft; not fixing the shaft so that it can move in a space; or the like. However, the effect of the change in the wedge angle accompanied by the movement of the position is not considered.

Suppose the wedge roller is placed at the narrower spatial position as described above. If the wedge roller moves to a narrower spatial position as the torque increases, the wedge angle decreases with the change of its position. When the wedge angle decreases, the normal forces generated by the wedge effect increase in proportion to the tangential forces. In addition, the normal forces increase so as to be in inverse proportion to the wedge angle. Therefore, if the wedge angle is determined not to generate the gross slip at the contact points even by the small torque, the generated normal forces increase more than in proportion to the torque when large torque is applied.

In the meantime, traction oil, which generates a large friction force under a large contact surface pressure, is used for the rolling friction transmission apparatus. The friction force generated by the traction oil increases more than in proportion to the tangential force, along with the increase of the normal forces. Therefore, the increase of the normal forces, which is caused by the decrease of the wedge angle accompanied by the increase of the torque, is the opposite tendency to the feature of the traction oil, and it is unnecessary.

Such an unnecessary increase of the normal forces accelerates rolling fatigue on the rolling surfaces and the transmission surface, shortens the life as the transmission apparatus, and decreases the power transmission efficiency. In order to inhibit the wedge roller from moving, which causes the above demerit, increasing the rigidity of the ring and transmission rollers inevitably causes an increase in weight or necessity to magnify the transmission apparatus.

Moreover, when the excessive torque is applied, the normal forces remarkably increase. In the extreme case, the wedge roller possibly deviate from or gets over the narrowest spatial position and damages the transmission apparatus.

SUMMARY OF THE INVENTION

It is therefore a first object of the present invention to provide a rolling friction transmission apparatus of a wedge roller type in which the unnecessary increase of the normal forces is eliminated and in which the normal forces are made appropriate corresponding to the torque in accordance with the feature of traction oil which is used, the normal forces being generated by the wedge angle changing at the contact points between (i) the transmission surface of the wedge roller and (ii) each of the rolling surface of the shaft and the ring, as a result of the movement of the wedge roller by the elastic deformation generated at the contact points and by the elastic deformation of the ring and the transmission rollers as the torque increases.

It is a second object of the present invention to provide the rolling friction transmission apparatus of a wedge roller type, which is small and long-lived, which has a high transmission efficiency, which can prevent the occurrence of excessive normal forces as a result of that the normal forces are made appropriate corresponding to the torque in accordance with the feature of the traction oil, and which decreases fatigue and friction loss at the contact points and friction loss of bearings which support the shaft and the ring.

If the movement of the wedge roller appropriate for the feature of the traction oil as described above is realized, the rigidity of the ring and the wedge roller can be decreased within a necessary range. As a result, it is possible to decrease the size of the transmission apparatus and its weight, which is a third object of the present invention.

It is a fourth object of the present invention to provide the rolling friction transmission apparatus of a wedge roller type which is highly reliable by preventing the wedge roller from deviating from or getting over the narrowest space, which is caused by the excessive normal forces with the increase of the torque.

The above object of the present invention can be achieved by a rolling friction transmission apparatus of a wedge roller type provided with: two parallel shafts which are mutually eccentric and are rotatably supported by a fixed part; a rolling-surface-shaft which has a cylindrical rolling surface at an outer surface thereof and is disposed at one of the two parallel shafts; a ring which has a cylindrical rolling surface at an inner surface thereof and is disposed at the other of the two parallel shafts; and three transmission rollers which have cylindrical transmission surfaces at outer surfaces thereof respectively and are placed in contact with the rolling surfaces of the rolling-surface-shaft and the ring, in an unequally-spaced space generated between the rolling surfaces of the rolling-surface-shaft and the ring and with such a gap that the three transmission rollers are not in contact with each other. Two of the three transmission rollers are "fixed rollers" each of which is supported rotatably around a shaft fixed to the fixed part in parallel to the two parallel shafts, and the rest of the three transmission rollers is a "wedge roller". The wedge roller is supported so that it can rotate while being parallel to axes of the fixed rollers and that it can move in the unequally-spaced space in a circumferential direction of the unequally-spaced. The wedge roller is drawn into the spatial position between the rolling-surface-shaft and the ring in such a direction that the unequally-spaced space becomes narrower by tangential forces generated by torque, which acts between the rolling-surface-shaft and the ring, at contact points between the transmission surface of the wedge roller and each of the rolling surfaces of the rolling-surface-shaft and the ring. Normal forces (which are preferably or resultantly large normal forces) are generated by a wedge effect of the wedge roller at the contact points. The normal forces cause normal forces (which are also preferably or resultantly large normal forces) even at contact points between each of the transmission surfaces of the fixed rollers and each of the rolling surfaces of the rolling-surface-shaft and the ring, to thereby transmit rotation between the rolling-surface-shaft and the ring without gross slip at the contact points. The wedge roller is placed at the spatial position where the unequally-spaced space is wider than that in a direction perpendicular to a direction of an eccentricity of the rolling-surface-shaft and the ring.

According to the rolling friction transmission apparatus of a wedge roller type of the present invention, it is provided with three transmission rollers, each of which has a cylindrical outer surface as a transmission surface. The three transmission rollers are placed in the unequally-spaced space, which is generated unequally between the rolling surfaces of the rolling-surface-shaft and the ring. The three transmission rollers are placed in contact with the rolling surfaces of the rolling-surface-shaft and the ring, with a gap therebetween by which the three transmission rollers are not in contact with each other.

Out of the three transmission rollers, the first transmission roller is placed near the narrowest spatial position (which is the position where the unequally-spaced space is the narrowest or smallest), and the second transmission roller is placed between the first transmission roller and the widest spatial position (which is the position where the unequally-spaced space is the widest or largest).

The first and second transmission rollers are the "fixed rollers" which are rotatably supported around the shaft fixed to the fixed part parallel to the shafts of the rolling-surface-shaft and the ring.

The third transmission roller is the "wedge roller". It is placed at the spatial position where the unequally-spaced space is wider than the space in the direction perpendicular to the direction of the eccentricity of the rolling-surface-shaft and the ring. It is supported so that it can rotate while being parallel to the axes of the other transmission rollers (i.e., the fixed rollers) and that it can move in the circumferential direction of the unequally-spaced space within a limited range in the unequally-spaced space. It is also applied with the elastic force by a spring so as to be pushed into the portion between the rolling-surface-shaft and the ring.

The wedge roller is drawn in the direction that the unequally-spaced space becomes narrower by the tangential forces generated by the torque, which acts between the rolling-surface-shaft and the ring, at the contact points between the transmission surface of the wedge roller and each of the rolling surfaces of the rolling-surface-shaft and the ring.

As a result, the large normal forces are generated by the wedge effect of the wedge roller at the contact points. The normal forces cause other large normal forces even at the contact points between each of the other transmission rollers and each of the rolling surfaces of the rolling-surface-shaft and the ring. Moreover, the friction forces generated by the rollers slightly slipping at the contact points are larger than the tangential forces. This enables the transmission apparatus to transmit the rotation between the rolling-surface-shaft and the ring without the gross slip at the contact points.

With respect to the traction oil used for the rolling friction transmission apparatus, its traction coefficient, which is a ratio of the friction force generated with respect to the normal force applied in accordance with the increase of pressure, increases until the pressure reaches about 1 GPa. At pressures of 1 to 2 GPa, the traction coefficient slowly increases. At pressures of 2 GPa or more, the traction coefficient shows the tendency that it is saturated and becomes almost constant. Therefore, in the case of the pressures 0.7 to 3 GPa, which is typically used on the transmission apparatus using the wedge roller, the wedge angle preferably increases corresponding to the increase of the contact surface pressure along with the increase of the torque.

The unequally-spaced space is the widest (i. e., the largest) and the narrowest (i.e., the smallest) in the direction of the eccentricity, and the wedge angle is zero in those widest and narrowest positions. In the middle of those widest and narrowest spatial positions, the wedge angle in the direction perpendicular to the direction of the eccentricity has the largest value, and it changes in the similar form to a sine wave with the change in the direction of the unequally-spaced space.

If the wedge roller is placed at the spatial position where the unequally-spaced space is wider than in the direction perpendicular to the direction of the eccentricity of the rolling-surface-shaft and the ring, the wedge roller moves in such a direction that the unequally-spaced space becomes narrower with the increase of the torque. As the wedge roller moves, the wedge angle changes to be large.

Namely, by placing the wedge roller in the spatial position wider than at the spatial position where the wedge angle is the largest, the change in the wedge angle by the change in the torque can be matched with the tendency of the change in the traction coefficient. Moreover, the occurrence of the extra normal forces can be prevented, which decreases load on the transmission surface and the rolling surfaces, friction loss on the contact surfaces, and fatigue on the transmission surface and the rolling surfaces. Therefore, it is possible to keep the life of the transmission apparatus long.

Moreover, by selecting the spatial position of the wedge roller and the rigidity of the ring and the transmission rollers so as to generate the wedge angle appropriate for the torque, it is possible to decrease the weight of the ring and the transmission rollers.

Furthermore, even when an excessive torque is applied and the elastic deformation increases, the wedge angle does not decrease. Thus, the excessive normal forces are not generated with respect to the torque, and therefore, the wedge roller does not get over the space.

The nature, utility, and further features of this invention will be more clearly apparent from the following detailed description with reference to preferred embodiments of the invention when read in conjunction with the accompanying drawings briefly described below.

BRIEF DESCRIPTION OF THE DRAWINGS

FIG. 1 is a cross sectional view of a rolling friction transmission apparatus of a wedge roller type associated with a first embodiment of the present invention, cut with a plane perpendicular to an input shaft and an output shaft thereof;

FIG. 2 is a cross sectional view of the rolling friction transmission apparatus of a wedge roller type, cut with a plane which intersects at right angle with the cutting plane of FIG. 1 and which is along with a line V-V of FIG. 1;

FIG. 3 is a schematic diagram showing a relationship among tangential forces Fw, normal forces Fn, and frictional forces at the contact points between the transmission surface of a wedge roller and each of the rolling surfaces of a shaft and a ring;

FIG. 4 is a schematic diagram showing the change of tan α with respect to the phase angle θ of the wedge roller, where θ is zero degree in the widest unequally space;

FIG. 5 is a schematic diagram showing the change of a traction coefficient μ with respect to a contact surface pressure P;

FIG. 6 is a schematic diagram showing the change of tan α, the contact surface pressure P, and the traction coefficient μ with respect to the phase angle θ of the wedge roller; and

FIG. 7 is a cross sectional view showing one example of rolling friction transmission apparatus of a wedge roller type in the related art.

## DETAILED DESCRIPTION OF THE PREFERRED EMBODIMENTS

Embodiments of the present invention will now be described with reference to the accompanying drawings.

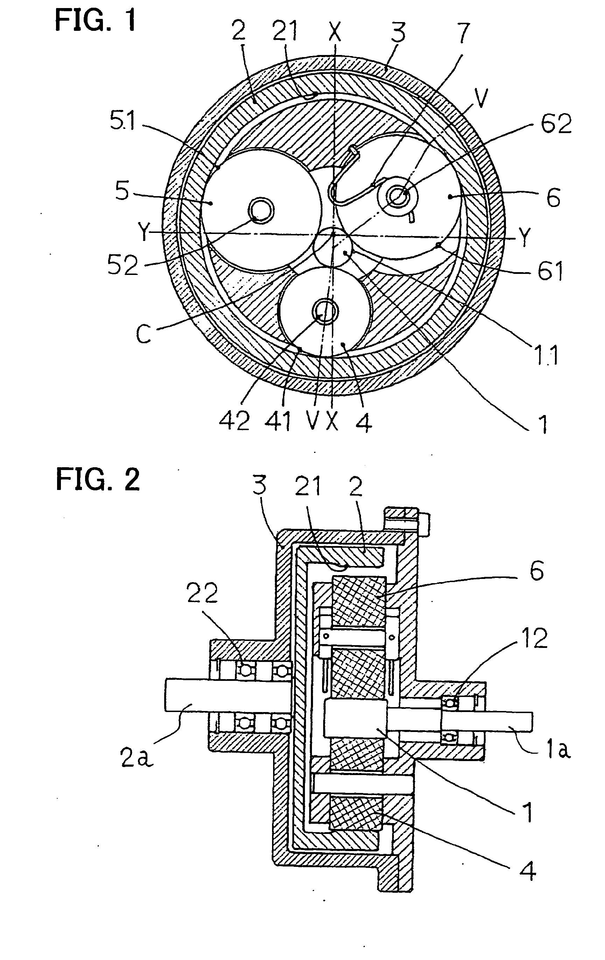

FIG. 1 and FIG. 2 show the first embodiment.

A shaft 1 (which is one example of the "rolling-surface-shaft" of the present invention) has a cylindrical rolling surface 11 at an outer surface thereof. A ring 2 has a cylindrical rolling surface 21 at an inner surface thereof. The shaft 1 and the ring 2 are mutually eccentric, and supported by a bearing 12 and a bearing 22, respectively, with respect to a fixed part 3.

Between the rolling surface 11 of the shaft 1 and the rolling surface 21 of the ring 2 in an unequally-spaced space, the widest (i.e., largest) space and narrowest (i.e., smallest) space are formed in the direction of eccentricity, i.e. in an X-X direction. There are three transmission rollers whose outer surfaces are cylindrical in this unequally-spaced space.

Three transmission rollers 4, 5 and 6 have, at outer surfaces thereof respectively, transmission surfaces 41, 51 and 61, respectively. These transmission surfaces 41, 51, and 61 are in rolling contact with the rolling surface 11 of the shaft 1 and the rolling surface 21 of the ring 2.

The first transmission roller 4 is a "fixed roller". It is placed near a spatial position in the narrowest (i.e., the smallest) space in the unequally-spaced space. It is also supported so that it can rotate around a shaft 42 which is fixed to the fixed part 3 parallel to the axis of the shaft 1 and the axis of the ring 2.

The second transmission roller 5 is a "fixed roller". It is placed not to be in contact with the first transmission roller 4 or the third transmission roller 6. It is also supported so that it can rotate around a shaft 52 which is fixed to the fixed part 3 parallel to the axis of the shaft 1 and the axis of the ring 2.

The third transmission roller 6 is a "wedge roller" (hereinafter, it is referred to as "the wedge roller 6"). It is placed at a spatial position where the unequally-spaced space is wider (i.e., larger) than that in a Y-Y direction which goes through the center C of the shaft 1 and the ring 2 and which is perpendicular to the X-X direction of the eccentricity. It is also supported so that it can rotate around a shaft 62 which can move in the circumferential direction of the unequally-spaced space while being parallel to the axis of the first transmission roller 4 and the axis of the second transmission roller 5. It is applied with an elastic force by a spring 7 so as to press it into a portion between the rolling surface 11 of the shaft 1 and the rolling surface 21 of the ring 2.

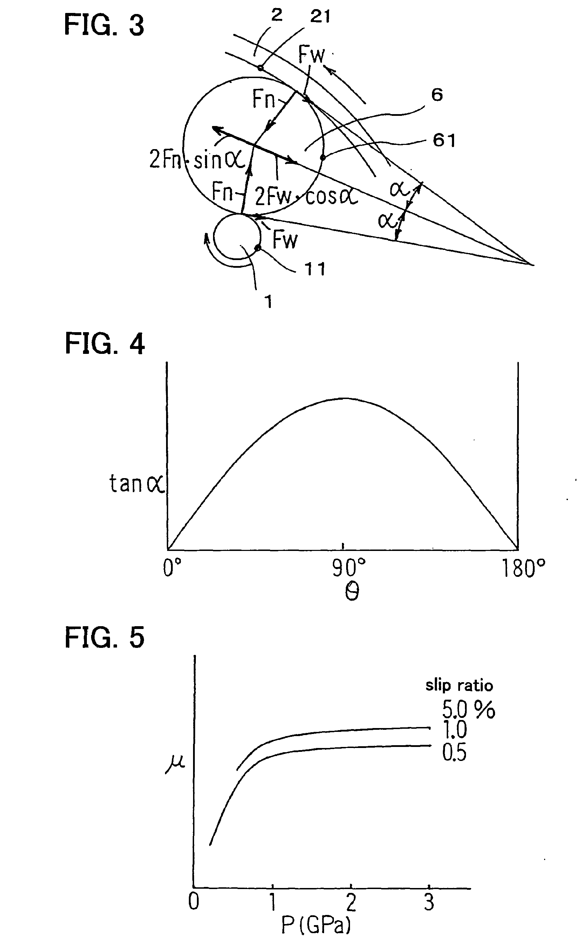

FIG. 3 shows the relationship of forces when tangential forces Fw are applied between the transmission surface 61 of the wedge roller 6 and each of the rolling surface 11 of the shaft 1 and the rolling surface 21 of the ring 2.

When the torque is applied between the shaft 1 and the ring 2 and when the tangential forces Fw act on the transmission surface 61 of the wedge roller 6, normal forces Fn are generated on the contact surfaces by the wedge effect. If the wedge angle is α, the following equation applies.

$$2Fw \cdot \cos\alpha = 2Fn \cdot \sin\alpha$$

$$Fw = Fn \cdot \tan\alpha$$

If the traction coefficient of traction oil is μ, the following equation applies with respect to frictions Ft generated by Fn.

$$Ft = \mu \cdot Fn$$

In order to transmit the torque without slipping too much at the contact points, the following inequality applies.

$$Ft \geqq Fw$$

Therefore, the following inequality should apply.

$$\mu > \tan\alpha$$

FIG. 4 is a schematic diagram showing the change of tan α with respect to the spatial position of the wedge roller 6 in the circumferential direction in the unequally-spaced space.

Suppose a phase angle θ at the widest spatial position in the unequally-spaced space is 0 degree and a phase angle θ at the narrowest spatial position in the unequally-spaced space is 180 degrees. In the X-X direction, as being at each of the phase angle θ of 0 degree and 180 degrees, the wedge angle α is zero; namely, tanα is zero.

In the Y-Y direction, as being at the phase angle θ of 90 degrees, the wedge angle α is the largest. Tanα changes similarly to a sine wave between the phase angles θ of 0 and 180 degrees.

Even if the wedge roller 6 is placed at a spatial position making any phase angle, if the space is expanded by the elastic deformation or the like as the torque increases, the wedge roller 6 moves in the direction that the phase angle θ becomes larger.

FIG. 5 is a schematic diagram showing the change of the traction coefficient μ of the traction oil with respect to a contact surface pressure P.

In a range where the contact surface pressure P is small, the traction coefficient μ increases as the contact surface pressure P increases, and tends to be saturated at the contact surface pressures P of 2 to 3 GPa.

Friction transmission apparatuses using metal materials, which are usually used for the shafts, the rings, and the transmission rollers for the purpose of rolling transmission, are used at the contact surface pressure range of about 0.7 to 3 GPa. This agrees with a range in which the traction coefficient μ of the traction oil increases and is saturated along with the increase of the contact surface pressure P.

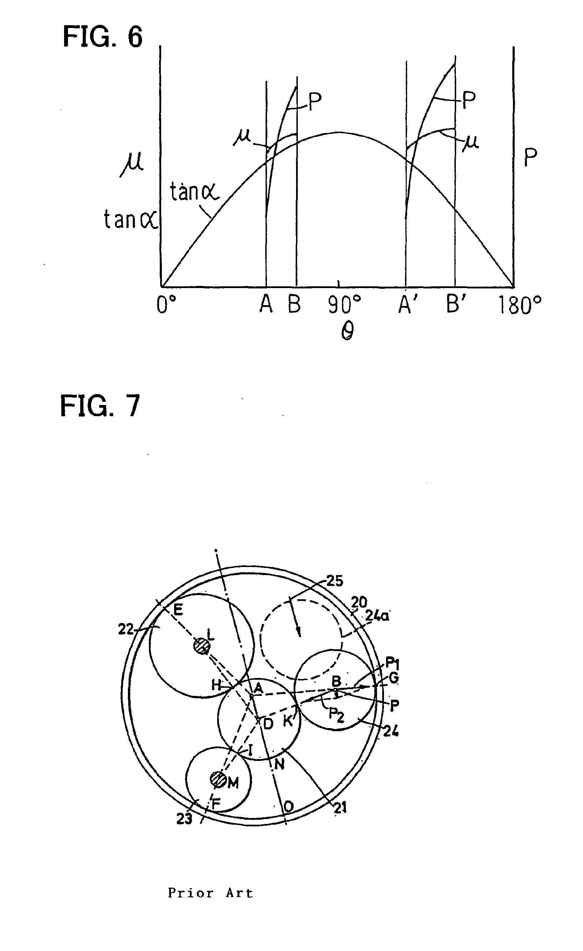

FIG. 6 is a schematic diagram showing the change of tan α, the contact surface pressure P, and the traction coefficient μ with respect to the phase angle θ of the wedge roller.

If the wedge roller 6 is placed at a spatial position where the phase angle θ is smaller than 90 degrees and if an initial phase angle θ is set to be a point A in FIG. 6 so that the wedge roller 6 is not slipped by a small torque, the wedge roller 6 moves such that the phase angle θ shifts to a point B, which is in the direction that the phase angle θ increases, i.e. tanα increases, as torque increases. The normal forces, however, do not increase enough to be in proportion to the torque. As the contact surface pressure P increases, the traction coefficient μ of the oil increases. Thus, excess normal forces are not applied to the contact surfaces. Moreover, tanα does not change extremely. Therefore, gross slip is not generated at the contact points.

In the related art, the wedge roller 6 is placed so that the phase angle θ ranges between 90 to 180 degrees. Thus, if an initial wedge angle in a small torque is set to be a point A' which has the same tanα value as that of the above-described point A, the wedge roller 6 moves in the direction that the phase angle θ increases, i.e. the wedge angle α decreases, as the torque increases. The decrease of tanα causes the increase of the normal forces, resulting in the increase of the elastic deformation. Therefore, the wedge roller 6 greatly moves to a point B' where the phase angle θ of the wedge roller 6 is large.

The traction coefficient μ increases as the contact surface pressure P increases, while the wedge angle α decreases in this case. Therefore, the normal forces increase more than in proportion to the torque although this is unnecessary.

Namely, in the related art, the initial phase angle θ of the wedge roller 6 is set to be in the range of 90 to 180 degrees. Thus, the excessive normal forces are applied with respect to the large torque, and this causes the above-described various adverse effects.

As described above, the wedge roller 6 is placed at the spatial position where the unequal spaced space is wider (i.e., larger) than in the middle of the widest (i.e., largest) space and the narrowest (i.e., the smallest) space in the present invention. According to the present invention, the wedge roller 6 moves in the direction that the wedge angle α increases in accordance with the increase of the torque. The increase of the wedge angle tanα and the increase of the traction coefficient μ of oil along with the increase of the contact surface pressure P have the same tendency or the same direction to each other. Thus, it is possible to prevent the excessive normal forces from being applied to the contact surfaces. This decreases the friction loss on the contact surfaces and the fatigue on the transmission surfaces of the transmission rollers and on the rolling surface 11 of the shaft 1 and the rolling surface 21 of the ring 2, compared to the related art. Therefore, the long life of the transmission apparatus can be obtained. Moreover, since the normal forces decrease, the elastic deformation of the shaft 1 and the ring 2 decreases. Thus, decreasing the rigidity of the ring 2 does not possibly cause the wedge roller 6 to deviate from or get over the space. Accordingly, the present invention has the advantage that the transmission apparatus can be made to be small and light, and inexpensively.

**Claims**

1. A rolling friction transmission apparatus of a wedge roller type **characterized in that** said apparatus comprises:

   two parallel shafts (1a, 2a) which are mutually eccentric and are rotatably supported by a fixed part (3);
   a rolling-surface-shaft (1) which has a cylindrical rolling surface (11) at an outer surface thereof and is disposed at one of said two parallel shafts (1a);
   a ring (2) which has a cylindrical rolling surface (21) at an inner surface thereof and is disposed at the other of said two parallel shafts (2a); and
   three transmission rollers (4, 5, 6) which have cylindrical transmission surfaces (41, 51, 61) at outer surfaces thereof respectively and are placed in contact with the rolling surfaces of said rolling-surface-shaft and said ring, in an unequally-spaced space generated between the rolling surfaces of said rolling-surface-shaft and said ring and with such a gap that said three transmission rollers are not in contact with each other,

two of said three transmission rollers being fixed rollers (4, 5) each of which is supported rotatably around a shaft (42, 52) fixed to said fixed part in parallel to said two parallel shafts, the rest of said three transmission rollers being a wedge roller (6), said wedge roller being supported so that it can rotate while being parallel to axes of said fixed rollers and that it can move in the unequally-spaced space in a circumferential direction of the unequally-spaced, said wedge roller being drawn into a spatial position between said rolling-surface-shaft and said ring in such a direction that the unequally-spaced space becomes narrower by tangential forces generated by torque, which acts between said rolling-surface-shaft and said ring, at contact points between the transmission surface of said wedge roller and each of the rolling surfaces of said rolling-surface-shaft and said ring,

normal forces being generated by a wedge effect of said wedge roller at the contact points, the normal forces causing normal forces even at contact points between each of the transmission surfaces of said fixed rollers and each of the rolling surfaces of said rolling-surface-shaft and said ring, to thereby transmit rotation between said rolling-surface-shaft and said ring without gross slip at the contact points,

wherein said wedge roller is placed at the spatial position where the unequally-spaced space is wider than that in a direction perpendicular to a direction of an eccentricity of said rolling-surface-shaft and said ring.

EP 1 426 658 A2

**FIG. 1**

**FIG. 2**

# FIG. 3

# FIG. 4

# FIG. 5

# FIG. 6

# FIG. 7

Prior Art